# EUROPÄISCHE PATENTSCHRIFT

(11) **EP 3 088 170 B1**
(45) Veröffentlichungstag und Bekanntmachung des Hinweises auf die Patenterteilung: **18.09.2019**
(21) Anmeldenummer: 15165733.5
(22) Anmeldetag: 29.04.2015
(51) Int. Cl.: B29D 30/66

(54) **POSITIONIERMECHANISMUS ZUM POSITIONIEREN EINER SPIKE-SETZPISTOLE GEGENÜBER EINEM FAHRZEUGLUFTREIFEN SOWIE VORRICHTUNG UND VERFAHREN ZUM BESPIKEN VON FAHRZEUGLUFTREIFEN**
POSITIONING MECHANISM FOR POSITIONING A SPIKE SETTING PISTOL RELATIVE TO A VEHICLE PNEUMATIC TIRE, AND DEVICE AND METHOD FOR SPIKING A PNEUMATIC VEHICLE TYRE
MÉCANISME DE POSITIONNEMENT D'UN PISTOLET DE POSE DE CLOU PAR RAPPORT À UN PNEU DE VÉHICULE ET DISPOSITIF ET PROCÉDÉ DESTINÉ À CLOUTER UN PNEU DE VÉHICULE

(43) Veröffentlichungstag der Anmeldung: 02.11.2016
(73) Patentinhaber: Continental Reifen Deutschland GmbH, 30165 Hannover (DE); Beckhoff Automation GmbH, 33415 Verl (DE)
(72) Erfinder: Koch, Tim, 30171 Hannover (DE); Ganguin, Volker, 30455 Hannover (DE); Berger, Markus, 31319 Sehnde (DE); Elkhadrami, Zouhair, 30419 Hannover (DE); Salzmann, Tim, 30167 Hannover (DE)
(74) Vertreter: Widjaja, Wira

(56) Entgegenhaltungen:
- EP-A2- 1 213 130
- WO-A1-00/78564
- DE-B- 1 255 299
- JP-A- S5 795 203
- JP-U- S52 166 203
- RU-C2- 2 216 452
- SE-L- 8 402 522
- US-A- 3 520 528

## Beschreibung

Die Erfindung betrifft einen elektronisch steuerbaren Positioniermechanismus zum Positionieren einer Spike-Setzpistole gegenüber der Oberfläche eines zu bespikenden Fahrzeugluftreifens. Die Erfindung betrifft ferner eine Vorrichtung und ein Verfahren zum Bespiken von Fahrzeugluftreifen mit einer Einspannvorrichtung für den Fahrzeugluftreifen und mit einem Positioniermechanismus.

Die bekannten vollautomatischen Positioniermechanismen für Spike-Setzpistolen erlauben eine Positionierung der Spike-Setzpistole mit zwei Freiheitsgraden, nämlich eine Positionierung parallel zur Reifenachse und eine Positionierung im rechten Winkel zur Reifenachse, um die Spike-Setzpistole dem jeweiligen Reifendurchmesser anzupassen und die Setztiefe einzustellen. Es sind ferner Positioniermechanismen bekannt, bei welchen die Positionierung der Spike-Setzpistole in Querrichtung des Laufstreifens entlang einer Kurvenbahn erfolgt, die der äußeren Kontur der Reifenoberfläche angenähert ist. Es ist daher mit den bekannten Positioniermechanismen nicht möglich, die Hauptachse der Spike-Setzpistole bei allen Setzvorgängen senkrecht zur Reifenoberfläche auszurichten. Die fehlende Orthogonalität der Hauptachse der Spike-Setzpistole führt einerseits dazu, dass die Spikes in manchen Setzpositionen "verkippt" in den Laufstreifen eingesetzt werden, und andererseits dazu, dass der Spikeüberstand je nach Setzposition durch jeweils andere Reibungsverhältnisse beim Setzen "winkelabhängig" variiert.

Die SE 8 402 522 L, JP S 57 95203 A, RU 2 216 452 C2 und DE 12 55 299 B offenbaren bekannte Vorrichtungen zum Bespiken von Reifen.

Der Erfindung liegt somit die Aufgabe zugrunde, eine Positioniervorrichtung derart auszuführen, dass die Spike-Setzpistole bei allen Setzvorgängen und in allen Setzpositionen senkrecht zur Laufstreifenoberfläche ausgerichtet werden kann, wobei sichergestellt sein soll, dass gegenüber den bekannten Positioniermechanismen zumindest mit gleicher Zykluszeit gearbeitet werden kann. Der Erfindung liegt ferner die Aufgabe zugrunde ein Verfahren zur Verfügung zu stellen, mit welchen auf verlässliche und einfache Weise eine vollautomatisch ablaufende Bespikung eines Fahrzeugluftreifens möglich ist.

Gelöst wird die gestellte Aufgabe gemäß Anspruch 1.

Der erfindungsgemäße Positioniermechanismus gestattet es, die Spike-Setzpistole stufenlos und je Spikesetzvorgang in einem definierten Winkel stets senkrecht zur Reifenoberfläche auszurichten. Der Spike wird somit beim Setzen nicht mehr oder kaum verkippt. Darüber hinaus tritt keine ungleichmäßig verteilte Reibung mehr zwischen dem Spike und dem Gummimaterial um das im Fahrzeugluftreifen einvulkanisierte Spikeloch beim Setzen auf, sodass die Setztiefe der Spikes kaum mehr variiert. Durch die gemäß der Erfindung vorgesehene Kinematik ist ferner sichergestellt, dass trotz einer Erhöhung der Freiheitsgrade durch Einstellbarkeit eines Schwenkwinkels die bewegte Masse des Positioniersystems gegenüber bekannten Positioniersystemen kaum erhöht ist. Es kann daher trotz zusätzlichem Freiheitsgrad mit gleicher Zykluszeit gearbeitet werden. Ein weiterer Vorteil der vorgesehenen Kinematik besteht darin, dass sie bei einer sehr vorteilhaften Beweglichkeit sehr steif ausgeführt werden kann, was eine Voraussetzung für eine hohe Positioniergenauigkeit ist.

Bei einer bevorzugten Ausführungsform der Erfindung sind die Antriebe Servomotoren, sodass eine sehr exakte und rationell durchführbare Positionierung der Spike-Setzpistole möglich ist.

Erfindungsgemäß sind ferner die Horizontalschlitten an Linearführungen, beispielsweise Längsschienen, verschiebbar gelagert, die insbesondere an einer stationär positionierten Basis angeordnet sind. Diese Maßnahme ist für einen kompakten Aufbau des Positioniermechanismus von Vorteil.

Bei einer weiteren vorteilhaften Ausführungsform der Erfindung ist die Winkelstellung des Vertikalschlittens relativ zu den Horizontalschlitten gegenüber der exakten vertikalen Ausrichtung um etwa ± 15° veränderbar und einstellbar. Diese Maßnahme ermöglicht die Positionierung der Spike-Setzpistole im erforderlichen Bereich.

Die erfindungsgemäße Vorrichtung zum Bespiken von Fahrzeugluftreifen weist einen erfindungsgemäß ausgeführten Positioniermechanismus auf, welcher derart gegenüber dem in einer Einspannvorrichtung eingespannten Fahrzeugluftreifen positionierbar ist, dass die Horizontalschlitten parallel zur Reifenachse bewegbar sind und der Vertikalschlitten derart bewegbar ist, dass die Hauptachse der auf ihm befestigten Spike-Setzpistole orthogonal zur Laufstreifenoberfläche des Fahrzeugluftreifens ausrichtbar ist.

Das erfindungsgemäße Verfahren weist folgende Verfahrensschritte auf:
a) Einspannen des Fahrzeugluftreifens in die Einspannvorrichtung,
b) Setzen des Fahrzeugluftreifens unter Innendruck,
c) Verfahren des Toolcenterpoints der Spike-Setzpistole auf Basis von Zielpositionen der Antriebe des Positioniermechanismus in eine Vorposition zu einem Spikeloch und Drehen des Fahrzeugluftreifens in die zugehörige Rotationsposition, wobei in der Vorposition der Toolcenterpoint der Spike-Setzpistole in einem Abstand über dem betreffenden Spikeloch liegt und die Achse der Spike-Setzpistole orthogonal zur Reifenoberfläche an der Spikesetzposition steht,
d) Verfahren der Spike-Setzpistole aus der Vorposition durch Ausfahren des entsprechenden Antriebes bis der Toolcenterpoint in das betreffende Spikeloch eintaucht,
e) Setzen des Spikes in das Spikeloch,
f) Zurückfahren des Toolcenterpoints durch Zurückfahren des Antriebes,
g) Wiederholung der Verfahrensschritte a) bis f), bis alle Spikelöcher mit Spikes versehen sind und
h) Entlüften und Ausspannen des Fahrzeugluftreifens.

Der Toolcenterpoint befindet sich an der Spitze der Spike-Setzpistole und korreliert mit der jeweiligen Spikesetzposition.

Vorteilhafterweise werden die Zielpositionen der Antriebe des Positioniermechanismus jeweils auf Basis eines Datensatzes bestimmt, zu welchen Daten die X-Y-Koordinaten jeder Spike-Lochposition in der Antriebsebene des Positioniermechanismus, der Oberflächenwinkel an jeder Spike-Lochposition und die Rotationsposition des Fahrzeugluftreifens gehören, so dass die Antriebe für jede Spike-Lochposition in die zugehörige Position verfahrbar sind.

Bei einer erfindungsgemäßen Ausführungsform des Verfahrens werden der Oberflächenwinkel und die Spike-Lochpositionen während des Drehens des Fahrzeugluftreifens um seine Drehachse mittels zumindest einer Kamera erfasst, so dass die Grunddaten zur Bestimmung des Datensatzes für jeden Fahrzeugluftreifen individuell ermittelt werden und eventuelle Fertigungstoleranzen der einzelnen Fahrzeugluftreifen ausgeglichen werden können.

Alternativ oder zusätzlich können die Zielpositionen der Antriebe des Positioniermechanismus aus Daten bzw. Koordinaten der Spike-Lochpositionen bestimmt werden, die innerhalb der Steuerung und von einer externen Datenerfassung bzw. einem externen Datenspeicher vorgegeben und abgespeichert sind.

Bei einer vorteilhaften Ausführungsform des erfindungsgemäßen Verfahrens werden die Antriebe mittels variabler Koppelfaktoren gekoppelt, so dass sich die Geschwindigkeitsverhältnisse der einzelnen Antriebe zueinander während der Bewegung ändern können. Somit sind einzelne Zielpositionen schnell und genau anfahrbar.

Alternativ können die Antriebe auch mittels fester Koppelfaktoren gekoppelt werden, so dass die Geschwindigkeiten der einzelnen Antriebe stets in einem festen Verhältnis zueinander stehen, was insbesondere die mechanische Belastung des Positioniersystems verringern kann.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
- Fig. 1: eine schematische Ansicht eines Positioniermechanismus gemäß der Erfindung und

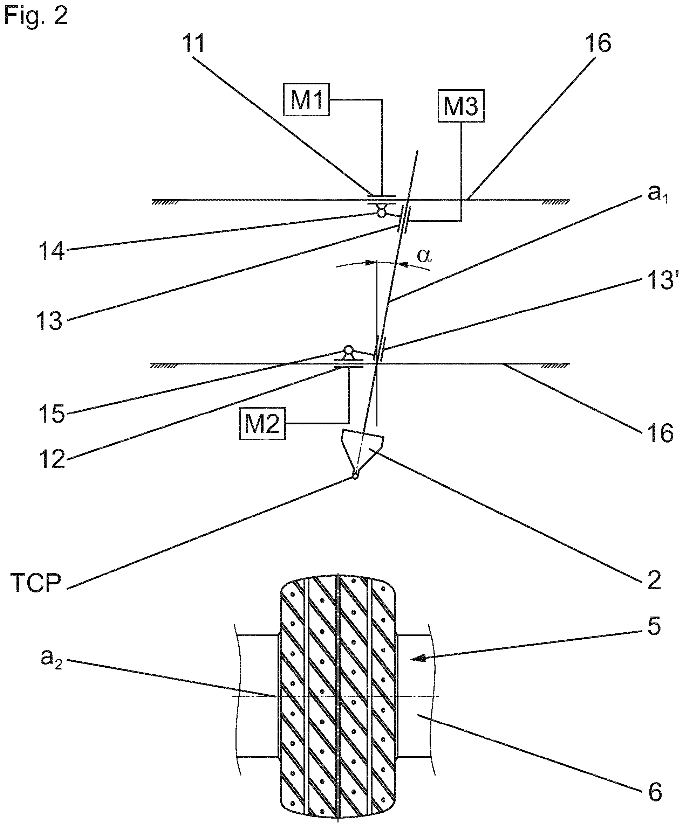

- Fig. 2: eine Prinzipskizze des Positioniermechanismus.

Die Erfindung befasst sich mit einer Vorrichtung zum Bespiken von Laufstreifen von Fahrzeugluftreifen mit einer Spike-Setzpistole, deren Ausrichtung gegenüber einem Laufstreifen eines Fahrzeugluftreifens mittels eines Positioniermechanismus variabel einstellbar ist.

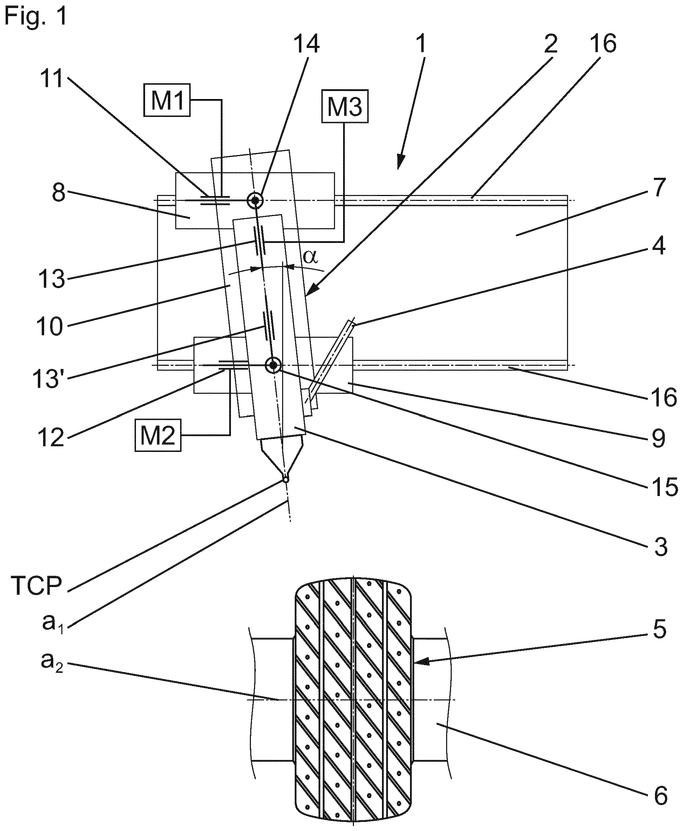

Fig. 1 zeigt einen Positioniermechanismus 1 mit einer Spike-Setzpistole 2 mit einem Pistolenkopf 3 und einer Zuführeinrichtung 4 für Spikes sowie einen in einer Einspannvorrichtung 6 gehaltenen Fahrzeugluftreifen 5. Der Fahrzeugluftreifen 5 weist einen mit Spikelöchern versehenen Laufstreifen auf und ist unter Innendruck stehend auf der Felge der Einspannvorrichtung 6, deren weiteren Bestandteile nicht dargestellt sind, montiert. Der eingespannte Fahrzeugluftreifen 5 wird beim Bespiken in an sich bekannter Weise schrittweise gedreht.

Die Spike-Setzpistole 2 wird mittels des Positioniermechanismus 1, wie weiter unten beschrieben wird, derart gegenüber dem Fahrzeugluftreifen 5 angeordnet, dass sich ihre in Spike-Setzrichtung erstreckende Hauptachse a₁ vor jedem Setzvorgang senkrecht zur Reifenoberfläche an der jeweiligen Spikesetzposition und koaxial zum Spikeloch befindet.

Der Positioniermechanismus 1 ist auf einer Basis 7 angeordnet und betätigt einen ersten und einen zweiten Horizontalschlitten 8, 9 sowie einen auf den beiden Horizontalschlitten 8, 9 angeordneten Vertikalschlitten 10, auf welchem die Spike-Setzpistole 2 befestigt ist. Der Positioniermechanismus 1 weist ein erstes prismatisches Gelenk 11 auf, welches eine lineare Bewegung des ersten Horizontalschlittens 8 auf einer Linearführung 16 ermöglicht, ferner ein zweites prismatisches Gelenk 12, welches, parallel zur Bewegungsrichtung des ersten Horizontalschlittens 8, eine lineare Bewegung des zweiten Horizontalschlittens 9 auf einer weiteren Linearführung 16 ermöglicht, sowie ein drittes und viertes prismatisches Gelenk 13, 13', welche Gelenke 13, 13' eine lineare Bewegung des Vertikalschlittens 10 quer zu und gegenüber den beiden Horizontalschlitten 8, 9 ermöglichen. Die Hauptachse a₁ der auf dem Vertikalschlitten 10 angeordneten Spike-Setzpistole 2 verläuft parallel zur Bewegungsrichtung der prismatischen Gelenke 13, 13'. Die drei prismatischen Gelenke 11, 12, 13 sind, jedes für sich, mittels Stellgliedern, insbesondere Antrieben M1, M2, M3, programmierbar steuerbar, insbesondere durch die vorgesehene elektronische Anlagensteuerung. Zwei passive Drehgelenke 14, 15 gestatten eine Winkelbewegung des Vertikalschlittens 10 gegenüber den beiden Horizontalschlitten 8, 9. Der Winkel α der Hauptachse a₁ der Spike-Setzpistole 2 ist gegenüber einer Orthogonalen zur Reifendrehachse a₂ um beispielsweise ± 15° einstell- und veränderbar.

Die als "prismatische Gelenke" 11, 12 und 13 bezeichneten Gelenke werden üblicherweise auch als Schubgelenke oder Lineargelenke bezeichnet.

Die Horizontalschlitten 8, 9 können in an der Basis 7 vorgesehenen Linearführungen 16, beispielsweise Schienen, verschiebbar positioniert sein. Die Antriebe M1, M2 und M3 können Servomotoren sein.

Zur Ausrichtung der Spike-Setzpistole 2 zum Fahrzeugluftreifen 5 wird ihr Toolcenterpoint (TCP), welcher sich an der Spitze des Pistolenkopfes 3 auf der Hauptachse a₁ befindet und mit der jeweiligen Spikesetzposition korreliert, automatisch über die elektronische Steuerung der Anlage eingestellt.

Der Positioniermechanismus 1 wird gegenüber dem aufgespannten Fahrzeugluftreifen 5 derart ausgerichtet, dass die linearen Bewegungen der Horizontalschlitten 8, 9 parallel zur Reifenachse a₂ erfolgen. In jeder Spike-Setzposition wird die Spike-Setzpistole 2 derart positioniert, dass ihre Hauptachse a₁ orthogonal zur Laufstreifenoberfläche und koaxial zum betreffenden Spikeloch verläuft.

Zur Ausrichtung der Spike-Setzpistole 2 gegenüber dem Fahrzeugluftreifen 5 wird je nach einzustellender Position entweder nur eines der angetriebenen prismatischen Gelenke 11, 12, 13 oder es werden zwei oder alle drei angetriebenen prismatischen Gelenke 11, 12, 13 in Kombination miteinander betätigt. Um beispielsweise die Spike-Setzpistole 2 in axialer Richtung des Fahrzeugluftreifens zu bewegen, ohne dabei die Winkelstellung der Hauptachse a₁ der Spike-Setzpistole 2 zu verändern, werden die beiden Horizontalschlitten 8, 9 entsprechend synchron linear bewegt. Mittels des dritten prismatischen Gelenkes 13 kann der Toolcenterpoint der Spike-Setzpistole 2 zum Fahrzeugluftreifen 5 hin oder vom Fahrzeugluftreifen 5 weg bewegt werden, wobei beispielsweise für eine orthogonal zur Reifenachse a₂ gerichtete Bewegung des TCP bei gleichzeitiger Winkelstellung des Vertikalschlittens 10 auch der erste und/oder der zweite Horizontalschlitten 8, 9 bewegt wird. Zum Ändern der Winkeleinstellung (Winkel a) der Hauptachse a₁ der Spike-Setzpistole 2 werden die beiden Horizontalschlitten 8, 9 in entsprechend unterschiedlichen Ausmaßen bewegt.

Der Positioniermechanismus 1 ermöglicht daher eine orthogonale Ausrichtung der Hauptachse a₁ der Spike-Setzpistole 2 zur Reifenoberfläche an jeder Spikesetzposition im Laufstreifen, wodurch der Spike mit optimaler Ausrichtung gesetzt wird.

Bei einer weiteren, nicht gezeigten Ausführungsvariante der Erfindung können in einer Anlage zwei Spike-Setzpistolen mit erfindungsgemäßen Positioniermechanismen zum Bespiken eines Fahrzeugluftreifens verwendet werden, insbesondere an einander gegenüberliegenden Seiten des Fahrzeugluftreifens. Bei dieser Ausführungsvariante können ferner zwei unterschiedliche Spiketypen in den Fahrzeugluftreifen eingesetzt werden. Dabei ist es unwesentlich, wo welcher Spiketyp in den Laufstreifen gesetzt werden soll, da beide Spike-Setzpistolen die gesamte Laufstreifenbreite mit Spikes besetzen können. Durch die Verwendung von zwei Spike-Setzpistolen an einem Fahrzeugluftreifen kann die Zykluszeit verringert werden, da eine der Spike-Setzpistolen bereits vorpositioniert werden kann, während die andere einen Spike setzt.

Das Verfahren zum Bespiken eines Fahrzeugluftreifens mittels einer Anlage oder Vorrichtung, die als Bestandteil einen erfindungsgemäßen Positioniermechanismus aufweist, wird im Folgenden näher erläutert. Wie bereits erwähnt wird das Bespiken vorzugsweise vollautomatisch mittels der elektronischen Anlagensteuerung durchgeführt. Der zu bespikende Fahrzeugluftreifen wird zuerst in die Einspannvorrichtung 6 eingespannt und unter Innendruck gesetzt. Mittels einer Bildverarbeitung, die eine oder mehrere Kameras, beispielsweise CCD-Kameras, umfasst, wird, während der Fahrzeugluftreifen um seine Drehachse a₂ gedreht wird, die Oberflächenkontur des Fahrzeugluftreifens erfasst, wobei die Spike-Lochpositionen miterfasst und abgespeichert werden.

Die elektronische Steuerung bestimmt für jedes Spikeloch einen Datensatz mit den entsprechenden X- und Y-Koordinaten in der Arbeitsebene des Positioniermechanismus, dem Oberflächenwinkel, dies ist der Winkel zwischen einer im Wesentlichen in axialer Richtung an die Oberfläche am betreffenden Spikeloch gelegten Tangente und einer Parallelen zur Reifendrehachse a₂, sowie mit der zugehörigen Rotationposition des Fahrzeugluftreifens. Aus diesen Daten werden die Zielpositionen der Antriebe M1, M2 und M3 für eine Vorposition bestimmt, in welcher der TCP der Spike-Setzpistole 2 in einem gewissen Abstand über dem betreffenden Spikeloch liegt, wobei die Achse a₁ orthogonal zur Oberfläche des Fahrzeugluftreifens steht. Dazu werden die Antriebe M1, M2 und M3 gekoppelt und der TCP wird aus seiner aktuellen Position in die Vorposition zum betreffenden Spikeloch bewegt. Insbesondere gleichzeitig wird der Fahrzeugluftreifen in die zugehörige Rotationsposition gedreht. Sind diese Positionen erreicht, fährt der Antrieb M3 den TCP auf Basis der Positionsdaten und auf Basis etwaiger weiterer Vorgaben, insbesondere einer vorgegebenen Setztiefe des Spikes, um die entsprechende Strecke aus. Dabei taucht der TCP im Winkel α in das betreffende Spikeloch ein. Anschließend wird der Spike in das Loch gesetzt und der TCP durch Zurückfahren des Antriebes M3 von der Reifenoberfläche wegbewegt.

Die betreffenden Schritte werden automatisch wiederholt, bis alle Spikelöcher im Laufstreifen mit Spikes versehen sind. Ist der Fahrzeugluftreifen komplett bespiket, wird er entlüftet und aus der Einspannvorrichtung 6 entfernt.

Alternativ zu einer Erfassung der Position der Löcher mittels zumindest einer Kamera können die erforderlichen Daten bzw. Koordinaten der Lochpositionen, etwa aus den Herstelldaten des betreffenden Fahrzeugluftreifens, bereits in der Steuerung vorgegeben und abgespeichert sein. Es können ferner die drei Antriebe M1, M2 und M3 mittels variabler oder mittels vorgegebener Koppelfaktoren miteinander gekoppelt werden.

### Bezugsziffernliste

- 1: Positioniermechanismus
- 2: Spike-Setzpistole
- 3: Pistolenkopf
- 4: Zuführeinrichtung
- 5: Fahrzeugluftreifen
- 6: Einspannvorrichtung
- 7: Basis
- 8, 9: Horizontalschlitten
- 10: Vertikalschlitten
- 11, 12, 13, 13': prismatisches Gelenk
- 14, 15: Drehgelenk
- 16: Linearführung
- a₁: Hauptachse
- a₂: Reifenachse
- M1, M2, M3: Antrieb
- α: Winkel

## Patentansprüche

1. Elektronisch steuerbarer Positioniermechanismus (1) zum Positionieren einer Spike-Setzpistole (2) gegenüber der Oberfläche eines zu bespikenden Fahrzeugluftreifens (5), aufweisend
- ein erstes prismatisches Gelenk (11), welches die Bewegung eines ersten Horizontalschlittens (8) *des Positioniermechanismus* gegenüber einer Basis (7) ermöglicht,
- ein zweites prismatisches Gelenk (12), welches, parallel zur Bewegung des ersten Horizontalschlittens (8), die Bewegung eines zweiten Horizontalschlittens (9) *des Positioniermechanismus* gegenüber der Basis (7) ermöglicht,
- zumindest ein weiteres prismatisches Gelenk (13, 13'), welches im Wesentlichen quer zur Bewegungsrichtung der Horizontalschlitten (8, 9) die Bewegung eines Vertikalschlittens (10) *des Positioniermechanismus* gegenüber den beiden Horizontalschlitten (8, 9) ermöglicht,
- zwei Drehgelenke (14, 15), welche eine Winkelbewegung des Vertikalschlittens (10) gegenüber den Horizontalschlitten (8, 9) ermöglichen, wobei die Spike-Setzpistole (2) derart auf dem Vertikalschlitten (10) angeordnet ist, dass ihre in Spike-Setzrichtung verlaufende Hauptachse (a₁) parallel zur Führungsrichtung des zumindest einen weiteren prismatischen Gelenkes (13, 13') orientiert ist, und wobei das erste, das zweite und das zumindest eine weitere prismatische Gelenk (11, 12, 13, 13') mittels je eines Antriebes (M1, M2, M3) betätigbar sind.

2. Positioniermechanismus (1) nach Anspruch 1, **dadurch gekennzeichnet, dass** die Antriebe (M1, M2, M3) Servomotoren sind.

3. Positioniermechanismus (1) nach Anspruch 1 oder 2, **dadurch gekennzeichnet, dass** die Horizontalschlitten (8, 9) an Linearführungen (16) einer Basis (7) verschiebbar gelagert sind.

4. Positioniermechanismus (1) nach einem der Ansprüche 1 bis 3, **dadurch gekennzeichnet, dass** die Winkelstellung des Vertikalschlittens (10) relativ zu einer Orthogonalen zur Reifendrehachse (a₂) um ca. ± 15° einstell- und veränderbar ist.

5. Vorrichtung zum Bespiken von Fahrzeugluftreifen mit einer Einspannvorrichtung (6) für den Fahrzeugluftreifen (5) und mit einem Positioniermechanismus (1) gemäß einem oder mehreren der Ansprüche 1 bis 4,
**dadurch gekennzeichnet,**
**dass** der Positioniermechanismus (1) derart gegenüber dem eingespannten Fahrzeugluftreifen (5) positionierbar ist, dass die Horizontalschlitten (8, 9) parallel zur Reifenachse (a₂) bewegbar sind und der Vertikalschlitten (10) derart bewegbar ist, dass die Hauptachse (a₁) der auf ihm befestigten Spike-Setzpistole (2) orthogonal zur Laufstreifenoberfläche des Fahrzeugluftreifens ausrichtbar ist.

6. Verfahren zum Bespiken von Fahrzeugluftreifen mittels einer Vorrichtung gemäß Anspruch 5 mit folgenden Verfahrensschritten:
a) Einspannen des Fahrzeugluftreifens (5) in die Einspannvorrichtung (6),
b) Setzen des Fahrzeugluftreifens (5) unter Innendruck,
c) Verfahren *eines* Toolcenterpoints der Spike-Setzpistole (2) auf Basis von Zielpositionen der Antriebe (M1, M2, M3) des Positioniermechanismus (1) in eine Vorposition zu einem Spikeloch und Drehen des Fahrzeugluftreifens (5) in die zugehörige Rotationsposition, wobei in der Vorposition der Toolcenterpoint der Spike-Setzpistole (2) in einem Abstand über dem betreffenden Spikeloch liegt und die Achse (a₁) der Spike-Setzpistole (2) orthogonal zur Reifenoberfläche an der Spikesetzposition steht,
d) Verfahren der Spike-Setzpistole (2) aus der Vorposition durch Ausfahren des entsprechenden Antriebes (M3) bis der Toolcenterpoint in das betreffende Spikeloch eintaucht,
e) Setzen des Spikes in das Spikeloch,
f) Zurückfahren des Toolcenterpoints durch Zurückfahren des Antriebes (M3),
g) Wiederholung der Verfahrensschritte a) bis f), bis alle Spikelöcher mit Spikes versehen sind und
h) Entlüften und Ausspannen des Fahrzeugluftreifens (5).

7. Verfahren nach Anspruch 6, **dadurch gekennzeichnet, dass** die Zielpositionen der Antriebe (M1, M2, M3) des Positioniermechanismus (1) jeweils auf Basis eines Datensatzes bestimmt werden, zu welchen Daten die X-Y-Koordinaten jeder Spike-Lochposition in der Arbeitsebene des Positioniermechanismus (1), der Oberflächenwinkel an jeder Spike-Lochposition und die Rotationsposition des Fahrzeugluftreifens gehören.

8. Verfahren nach Anspruch 6 oder 7, **gekennzeichnet durch** Erfassen der Oberflächenwinkel und der Spike-Lochpositionen während des Drehens des Fahrzeugluftreifens (5) um seine Drehachse (a₂) mittels zumindest einer Kamera.

9. Verfahren nach Anspruch 6, **dadurch gekennzeichnet, dass** die Zielpositionen der Antriebe (M1, M2, M3) des Positioniermechanismus (1) aus Daten bzw. Koordinaten der Spike-Lochpositionen bestimmt werden, die vorgegeben und abgespeichert sind.

10. Verfahren nach einem der Ansprüche 6 bis 9, **dadurch gekennzeichnet, dass** die Antriebe (M1, M2, M3) mittels variabler Koppelfaktoren gekoppelt werden.

11. Verfahren nach einem der Ansprüche 6 bis 9, **dadurch gekennzeichnet, dass** die Antriebe (M1, M2, M3) mittels fester Koppelfaktoren gekoppelt werden.

## Claims

1. Electronically controllable positioning mechanism (1) for positioning a spike setting pistol (2) relative to the surface of a vehicle pneumatic tyre (5) to be spiked, having
- a first prismatic joint (11), which permits the movement of a first horizontal slide (8) *of the positioning mechanism* relative to a base (7),
- a second prismatic joint (12), which, parallel to the movement of the first horizontal slide (8), permits the movement of a second horizontal slide (9) *of the positioning mechanism* relative to the base (7),
- at least one further prismatic joint (13, 13'), which, substantially transversely with respect to the direction of movement of the horizontal slides (8, 9), permits the movement of a vertical slide (10) *of the positioning mechanism* relative to the two horizontal slides (8, 9),
- two rotary joints (14, 15), which permit an angular movement of the vertical slide (10) in relation to the horizontal slides (8, 9),
wherein the spike setting pistol (2) is arranged on the vertical slide (10) in such a manner that its main axis (a₁) running in the spike setting direction is oriented parallel to the guiding direction of the at least one further prismatic joint (13, 13'), and wherein the first, the second and the at least one further prismatic joint (11, 12, 13, 13') are actuable by means of one drive (M1, M2, M3) each.

2. Positioning mechanism (1) according to Claim 1, **characterized in that** the drives (M1, M2, M3) are servomotors.

3. Positioning mechanism (1) according to Claim 1 or 2, **characterized in that** the horizontal slides (8, 9) are mounted displaceably on linear guides (16) of a base (7).

4. Positioning mechanism (1) according to one of Claims 1 to 3, **characterized in that** the angular position of the vertical slide (10) is adjustable and changeable by approx. ±15° relative to an orthogonal to the axis of rotation (a₂) of the tyre.

5. Device for spiking vehicle pneumatic tyres, with a clamping device (6) for the vehicle pneumatic tyre (5) and with a positioning mechanism (1) according to one or more of Claims 1 to 4, **characterized in that** the positioning mechanism (1) can be positioned in relation to the clamped vehicle pneumatic tyre (5) in such a manner that the horizontal slides (8, 9) are movable parallel to the tyre axis (a₂) and the vertical slide (10) is movable in such a manner that the main axis (a₁) of the spike setting pistol (2) fastened on said vertical slide can be oriented orthogonally to the tread surface of the vehicle pneumatic tyre.

6. Method for spiking vehicle pneumatic tyres by means of a device according to Claim 5, with the following method steps:
a) clamping the vehicle pneumatic tyre (5) in the clamping device (6),
b) setting the vehicle pneumatic tyre (5) under internal pressure,
c) moving a tool centre point of the spike setting pistol (2) on the basis of target positions of the drives (M1, M2, M3) of the positioning mechanism (1) into a preliminary position with respect to a spike hole and rotating the vehicle pneumatic tyre (5) into the associated rotational position, wherein, in the preliminary position of the tool centre point, the spike setting pistol (2) lies at a distance above the relevant spike hole and the axis (a₁) of the spike setting pistol (2) is orthogonal to the tyre surface at the spike setting position,
d) moving the spike setting pistol (2) out of the preliminary position by extending the corresponding drive (M3) until the tool centre point enters the relevant spike hole,
e) setting the spike into the spike hole,
f) retracting the tool centre point by retracting the drive (M3),
g) repeating method steps a) to f) until all of the spike holes are provided with spikes, and
h) venting and unclamping the vehicle pneumatic tyre (5) .

7. Method according to Claim 6, **characterized in that** the target positions of the drives (M1, M2, M3) of the positioning mechanism (1) are in each case determined on the basis of a data set, the data of which includes the X-Y coordinates of each spike hole position in the working plane of the positioning mechanism (1), the surface angle at each spike hole position and the rotational position of the vehicle pneumatic tyre.

8. Method according to Claim 6 or 7, **characterized by** detecting the surface angles and the spike hole positions during the rotation of the vehicle pneumatic tyre (5) about its axis of rotation (a₂) by means of at least one camera.

9. Method according to Claim 6, **characterized in that** the target positions of the drives (M1, M2, M3) of the positioning mechanism (1) are determined from data or coordinates of the spike hole positions which are predetermined and stored.

10. Method according to one of Claims 6 to 9, **characterized in that** the drives (M1, M2, M3) are coupled by means of variable coupling factors.

11. Method according to one of Claims 6 to 9, **characterized in that** the drives (M1, M2, M3) are coupled by means of fixed coupling factors.

## Revendications

1. Mécanisme de positionnement (1) à commande électronique destiné à positionner un pistolet de placement de crampons (2) par rapport à la surface d'un pneumatique de véhicule (5) à cramponner, ledit mécanisme comprenant
- une première articulation prismatique (11) permettant de déplacer un premier chariot horizontal (8) du mécanisme de positionnement par rapport à une base (7),
- une deuxième articulation prismatique (12) permettant de déplacer un deuxième chariot horizontal (9) du mécanisme de positionnement par rapport à la base (7), parallèlement au déplacement du premier chariot horizontal (8),
- au moins une autre articulation prismatique (13, 13') permettant de déplacer un chariot vertical (10) du mécanisme de positionnement par rapport aux deux chariots horizontaux (8, 9) sensiblement transversalement à la direction de déplacement des chariots horizontaux (8, 9),
- deux articulations tournantes (14, 15) permettant de déplacer angulairement le chariot vertical (10) par rapport aux chariots horizontaux (8, 9),
le pistolet de placement de crampons (2) étant disposé sur le chariot vertical (10) de telle sorte que son axe principal (a₁), s'étendant dans la direction de placement de crampons soit orienté parallèlement à la direction de guidage de l'au moins une autre articulation prismatique (13, 13'), et la première, la deuxième et l'au moins une autre articulation prismatique (11, 12, 13, 13') pouvant chacune être actionnées au moyen d'un entraînement (M1, M2, M3).

2. Mécanisme de positionnement (1) selon la revendication 1, **caractérisé en ce que** les entraînements (M1, M2, M3) sont des servomoteurs.

3. Mécanisme de positionnement (1) selon la revendication 1 ou 2, **caractérisé en ce que** les chariots horizontaux (8, 9) sont montés de manière coulissante sur des guides linéaires (16) d'une base (7) .

4. Mécanisme de positionnement (1) selon l'une des revendications 1 à 3, **caractérisé en ce que** la position angulaire du chariot vertical (10) par rapport à une perpendiculaire à l'axe de rotation de pneumatique (a₂) est réglable et modifiable sur environ ±15°.

5. Dispositif de placement de crampons sur des pneumatiques, lequel comprend un dispositif de serrage (6) destiné au pneumatique de véhicule (5) et un mécanisme de positionnement (1) selon l'une au moins des revendications 1 à 4,
**caractérisé en ce que**
le mécanisme de positionnement (1) peut être positionné par rapport au pneumatique de véhicule serré (5) de telle sorte que les chariots horizontaux (8, 9) soient déplaçables parallèlement à l'axe de pneumatique (a₂) et que le chariot vertical (10) soit déplaçable de telle sorte que l'axe principal (a₁) du pistolet de placement de crampons (2), fixé sur celui-ci, puisse être orienté perpendiculairement à la surface de roulement du pneumatique de véhicule.

6. Procédé de placement de crampons sur des pneumatiques de véhicule au moyen d'un dispositif selon la revendication 5, le procédé comprenant les étapes suivantes :
a) serrer le pneumatique de véhicule (5) dans le dispositif de serrage (6),
b) mettre le pneumatique de véhicule (5) sous pression interne,
c) déplacer un point central d'outil du pistolet de placement de crampons (2) en fonction de positions cibles des entraînements (M1, M2, M3) du mécanisme de positionnement (1) jusqu'à une position préalable par rapport à un trou de crampon et faire tourner le pneumatique de véhicule (5) jusqu'à la position de rotation associée, la position préalable du point central d'outil du pistolet de placement de crampons (2) étant située à une distance au-dessus du trou de crampon correspondant et l'axe (a₁) du pistolet de placement de crampons (2) étant placé orthogonalement à la surface du pneumatique à la position de placement de crampon,
d) déplacer le pistolet de placement de crampons (2) de la position préalable par déploiement de l'entraînement correspondant (M3) jusqu'à ce que le point central d'outil pénètre dans le trou de crampon correspondant,
e) placer la crampon dans le trou de crampon,
f) reculer le point de centre d'outil par recul de l'entraînement (M3),
g) répéter les étapes a) à f) du procédé jusqu'à ce que tous les trous de crampons soient pourvus de crampons et
h) purger et desserrer le pneumatique de véhicule (5) .

7. Procédé selon la revendication 6, **caractérisé en ce que** les positions cibles des entraînements (M1, M2, M3) du mécanisme de positionnement (1) sont chacune déterminées sur la base d'un ensemble de données auxquelles appartiennent les coordonnées X-Y de chaque position de trou de crampon dans le plan de travail du mécanisme de positionnement (1), l'angle de surface à chaque position de trou de crampon et la position en rotation du pneumatique de véhicule.

8. Procédé selon la revendication 6 ou 7, **caractérisé par** la détection de l'angle de surface et des positions de trou de crampon lors de la rotation du pneumatique de véhicule (5) sur son axe de rotation (a₂) au moyen d'au moins une caméra.

9. Procédé selon la revendication 6, **caractérisé en ce que** les positions cibles des entraînements (M1, M2, M3) du mécanisme de positionnement (1) sont déterminées à partir de données ou de coordonnées des positions de trou de crampon qui sont prescrites et mémorisées.

10. Procédé selon l'une des revendications 6 à 9, **caractérisé en ce que** les entraînements (M1, M2, M3) sont accouplés au moyen de facteurs d'accouplement variables.

11. Procédé selon l'une des revendications 6 à 9, **caractérisé en ce que** les entraînements (M1, M2, M3) sont accouplés au moyen de facteurs d'accouplement fixes.
